Europäisches Patentamt

**European Patent Office**

**Office européen des brevets**

(11) Numéro de publication: **0 315 263 B1**

(12)

# FASCICULE DE BREVET EUROPEEN

(45) Date de publication de fascicule du brevet: **26.02.92**  (51) Int. Cl.⁵: **B65G 49/08**, B65G 1/02

(21) Numéro de dépôt: **88202411.0**

(22) Date de dépôt: **28.10.88**

(54) **Magasin à rayons mobiles pour la maturation de pains de matière synthétique expansée.**

(30) Priorité: **05.11.87 IT 6794187**

(43) Date de publication de la demande:
**10.05.89 Bulletin  89/19**

(45) Mention de la délivrance du brevet:
**26.02.92 Bulletin  92/09**

(84) Etats contractants désignés:
**AT BE CH DE ES FR GB GR LI LU NL SE**

(56) Documents cités:
**DE-A- 2 402 115**
**GB-A- 1 033 281**

(73) Titulaire: **GESTIONI RIUNITE TOSCANA GOM-
MA S.p.A.**
**Via Palestro 115**
**I-27038 Robbio(Pavia)(IT)**

(72) Inventeur: **Giuliano, Claudio**
**Via Vecchia di Vigevano 93**
**I-27025 Gambolo' (Pavia)(IT)**
Inventeur: **Gilardi, Pier Enrico, Dr.-Ing.**
**Via Amedeo d'Aosta 18**
**I-27038 Robbio (Pavia)(IT)**

(74) Mandataire: **Patrito, Pier Franco, Dr. Ing.**
**Cabinet PATRITO BREVETTI Via Don Minzoni
14**
**I-10121 Torino(IT)**

Rank Xerox (UK) Business Services

# Description

La présente invention a pour objet un magasin pour la maturation de pains de matière synthétique expansée.

Dans la production de matières expansées, la matière est soumise à un procédé d'expansion en continu sur un tapis transporteur en mouvement, ainsi formant un produit de section constante, au moins approximativement rectangulaire dans la plupart des cas, qui est découpé en des longueurs fixées à l'avance, de plusieurs mètres d'ordinaire. A la sortie de l'installation, les blocs produits, qui sont appelés pains, ont atteint une consistance permettant de les manipuler, mais ils ne possèdent pas encore la consistance définitive, et les réactions chimiques exothermiques provoquées dans leur sein ne sont pas encore épuisées, de manière que les pains doivent être emmagasinés et laissés mûrir pendant un certain temps, qui dure plusieurs heures, avant d'en disposer définitivement. Il est toujours très indiqué, et dans certains cas il est indispensable, que les pains ne soient pas superposés l'un sur l'autre au cours de cette phase d'emmagasinage. Cela parce que, en cas de superposition, le poids des pains de dessus pourrait déformer les pains de dessous, qui n'ont pas encore atteint leur résistance mécanique finale, et, en plus, parce qu'une superposition directe des pains réduirait la surface globale exposée au contact avec l'atmosphère et, par conséquent, les échanges thermiques, de sorte que les réactions chimiques exothermiques encore actives à l'intérieur des pains donneraient lieu à une surchauffe de ces derniers. A cette surchauffe suivrait une détérioration des qualités de la matière, en particulier un jaunissement et, dans les cas extrêmes, une autocombustion pourrait se produire.

Pour emmagasiner les pains produits sans les superposer, la façon de procéder la plus simple consiste à prélever le pain dès qu'il est découpé, au moyen d'une grue spéciale suspendue à pince, le soulever, le déplacer latéralement et le déposer à côté des autres pains précédemment produits, sur une surface de maturation d'où les pains seront enlevés selon la même façon de procéder, une fois la maturation achevée. L'inconvénient de cette façon de procéder consiste dans l'exploitation insuffisante de l'espace du magasin, qui n'est utilisé que sur la hauteur d'un pain et doit donc avoir une surface très grande.

Pour exploiter en hauteur aussi l'espace du magasin, ont été réalisées des installations de maturation, qui comprennent un magasin avec de nombreuses cellules disposées suivant un réseau sur différents niveaux, dont chacune est munie d'un tapis roulant et dont les dimensions correspondent à celles d'un pain. A la sortie de l'installation d'expansion, le pain en formation est reçu sur un tapis transporteur monté sur un chariot mobile transversalement et en élévation et, lorsque le pain a atteint la longueur prévue et il a été découpé, le chariot est déplacé latéralement et en élévation pour porter le pain en face à une cellule vide du magasin, après quoi le pain est fait glisser du tapis transporteur du chariot à celui de la cellule. Pendant que cette opération se déroule, un second chariot avec ruban transporteur se place à la sortie de l'installation d'expansion pour recevoir le nouveau pain en formation. Toutefois, même avec une telle installation de maturation l'espace n'est pas exploité complètement, car il faut laisser libre tout l'espace de manoeuvre des chariots se déplaçant latéralement et en élévation, lesquels ont une longueur égale à celle des pains. De plus, la paire de chariots déplaçables latéralement et en élévation se révèle notablement coûteuse.

Pour réduire le prix de revient de l'installation on a proposé de remplacer la paire de chariots par un bras de distribution muni de tapis transporteur, articulé à la sortie de l'installation d'expansion et qui peut être orienté pour en porter l'extrémité mobile en face aux différentes cellules du magasin. Le fonctionnement de cette installation est rendu possible par une certaine déformabilité des pains de matière expansée qui, naturellement, en opérant de cette façon, sont courbés tant au passage de la sortie de l'installation d'expansion au bras de distribution qu'au passage du bras de distribution à la cellule de maturation, mais la déformabilité limitée des pains pose des limites à l'orientabilité admissible du bras de distribution et par conséquent ne permet pas d'utiliser un gran nombre de cellules. Dans cette installation aussi, l'espace nécessaire pour l'orientation du bras de distribution doit rester dégagé et il ne peut pas être utilisé.

Le but de la présente invention est de réaliser un magasin particulièrement adapté à la maturation des pains de matière synthétique expansée, qui permet une excellente exploitation de l'espace, qui n'exige pas des installations d'un prix particulièrement élevé et qui ne comporte intrinsèquement aucune limitation au nombre de cellules destinées à contenir les pains en cours de maturation.

Ce but est atteint, selon l'invention, par un magasin pour la maturation de pains de matière synthétique expansée, destiné à une installation desservie par un ruban transporteur amenant les pains à distribuer dans le magasin, et par une grue suspendue à pince disposée pour soulever un pain du ruban transporteur, pour le déplacer latéralement et pour le déposer dans un espace de maturation, par le fait que le magasin comprend au moins un rayonnage orienté parallèlement au ruban transporteur et disposé latéralement à ce dernier, comportant une charpente qui supporte un rayon inférieur fixe dont la largeur et la longueur sont proportionnées à la largeur et à la longueur des pains à recevoir, et au-dessus du rayon fixe, à des distances réciproques verticales quelque peu supérieures à la hauteur des pains à recevoir, une pluralité de moyens de réception de pains, dont chacun peut être déplacé entre une position de travail, dans laquelle il constitue un rayon d'une largeur et d'une longueur proportionnées à la largeur et à la longueur des pains à recevoir, et une position de repos, dans laquelle il laisse dégagé l'accès à partir du haut au rayon situé en dessous.

Grâce à cette structure, chaque moyen de réception, destiné à constituer dans la position de travail un rayon pour recevoir un pain, peut être porté à une position de repos, dans laquelle il rend accessible à partir du haut le rayon se trouvant dans une position de travail en dessous. Il est possible ainsi de remplir le rayonnage au moyen de la grue suspendue à pince, à commencer par le rayon inférieur fixe et, après le dépôt de chaque pain sur un rayon, en déplaçant de la position de repos à la position de travail le moyen de réception situé immédiatement au-dessus du rayon juste chargé. Les opérations inverses permettent ensuite de prélever au moyen de la grue suspendue les pains désormais mûrs et de les acheminer aux traitements ultérieurs, à l'aide du même ruban transporteur qui les a amenés ou bien à l'aide de toute autre moyen. Le nombre de rayons superposés dans chaque rayonnage n'est limité que par l'espace vertical disponible sous la grue suspendue et qui peut être desservi par cette grue. Plusieurs rayonnages peuvent être placé côte à côte, et leur nombre n'est limité que par l'espace horizontal disponible et qui peut être desservi par la grue suspendue. L'ensemble ne comporte pas d'espaces inutilisables et il permet donc d'exploiter de la meilleure façon l'espace disponible. Le moyen pour la manutention des pains, constitué par une simple grue suspendue à pince, est le plus économique possible pour l'application prévue, et il correspond substantiellement au moyen utilisé dans les installations les plus simples mentionnées précédemment. Le rayonnage avec rayons mobiles selon l'invention se révèle plus économique qu'une pluralité correspondante de cellules superposées munies de tapis transporteur. Enfin, le fonctionnement de l'en semble est simple et il se prête à être facilement automatisé.

De préférence, ladite pluralité de moyens de réception comprend: une pluralité de paires de glissières horizontales supérieures latérales supportées par la charpente au-dessus du rayon fixe aux distances verticales indiquées, et une pluralité correspondante de paires de glissières horizontales inférieures latérales supportées par la charpente sous le rayon fixe à des courtes distances réciproques; des moyens de renvoi disposés aux extrémités de chaque glissière horizontale supérieure et inférieure; pour chaque double paire formée d'une paire de glissières supérieures et de la paire correspondante de glissières inférieures, une paire de chaînes continues parcourant lesdites glissières et passant sur lesdits moyens de renvoi; et pour chaque paire de chaînes, un rayon mobile s'étendant transversalement d'une chaîne à l'autre et s'étendant longitudinalement sur une longueur proportionnée à celle des pains à recevoir. Chaque rayon mobile peut être constitué par une pluralité d'éléments articulés en store, s'étendant de l'une à l'autre des chaînes correspondantes et reliés à elles.

Ces caractéristiques et avantages et d'autres, de l'objet de l'invention, ressortiront plus clairement de la description suivante d'une forme de réalisation, donnée à titre d'exemple non limitatif, représentée schématiquement sur les dessins annexés, dans lesquels:

Fig. 1 représente une coupe transversale, faite selon la ligne 1-1 de la figure 2, d'un magasin selon l'invention comportant deux rayonnages placés côte à côte, et elle montre aussi le ruban transporteur amenant les pains et la grue suspendue pour leur manutention; et

Fig. 2 représente une coupe longitudinale d'un rayonnage selon l'invention, faite selon la ligne II-II de la figure 1.

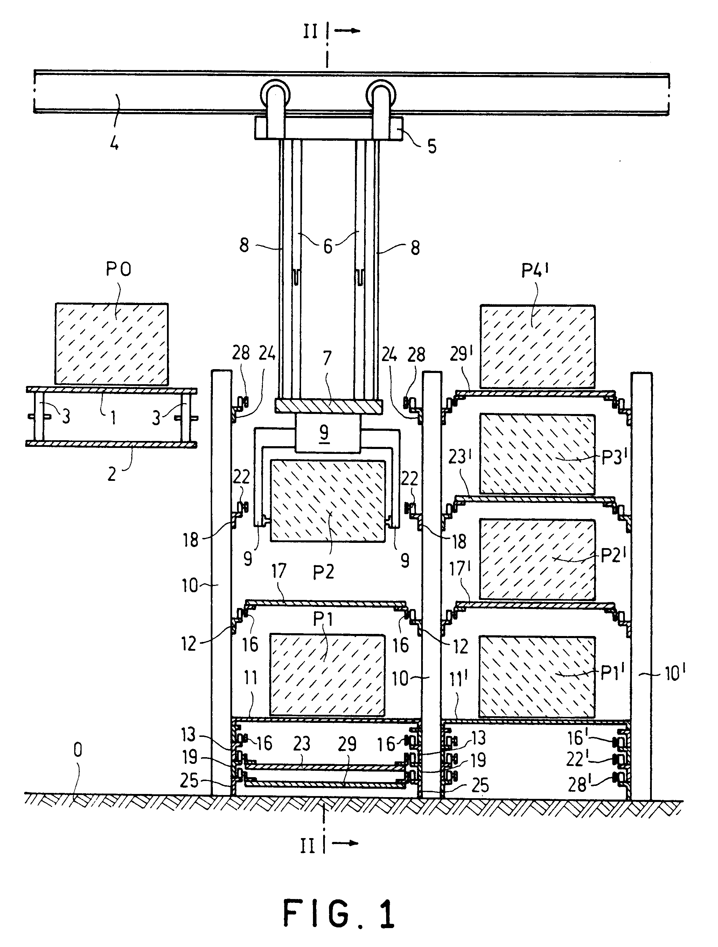

En se référant d'abord à la figure 1, les numéros 1 et 2 indiquent la branche active et la branche de retour, renvoyée par des roues de renvoi 3, d'un ruban transporteur qui amène les pains à acheminer à la maturation et qui, le cas échéant, peut servir ensuite pour enlever les pains mûrs. Un pains P0 est indiqué sur le ruban transporteur 1; il peut s'agir en général d'un pain qui avance au fur et à mesure que procède sa formation, et qui sera ensuite découpé au moment où la longueur désirée aura été atteinte.

Le numéro 4 indique l'un des rails de suspension d'une grue suspendue, comprenant: un chariot 5 coulissant dans les deux sens le long du rail 4, des bras articulés 6 qui guident une poutre longitudinale 7, des tirants 8 pour soulever et abaisser la poutre longitudinale 7 et, le long de cette dernière, des pinces 9 adaptées à saisir avec leur mâchoires les pains à déplacer. Un pain P2 est représenté dans la condition dans laquelle il est saisi par les pinces 9. La poutre longitudinale 7 avec les pinces 9 s'étend sur toute la longueur des pains à déplacer.

Les parties décrites jusqu'ici correspondent essentiellement aux éléments d'une installation du type dans lequel les pains à mûrir sont simplement déposés l'un à côté de l'autre, à part le fait que la grue suspendue 4-9 est prédisposée pour une course de déplacement vertical plus grande.

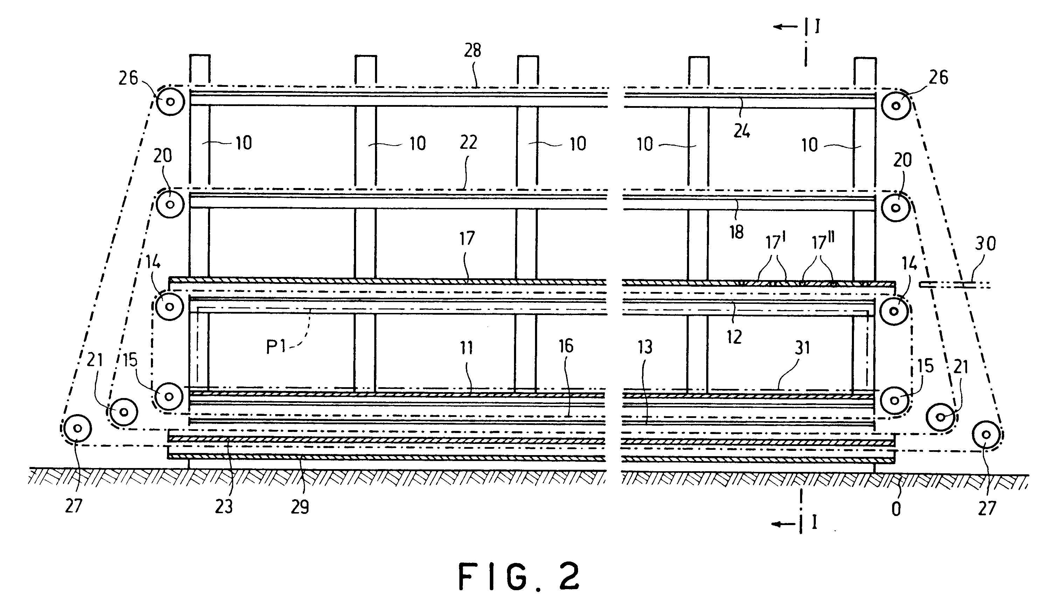

Le magasin selon l'invention, représenté sur les figures 1 et 2, comprend un ou plusieurs rayonnages, dont chacun comporte une pluralité de montants 10, fixés à un plancher 0, et supportant à une certaine hauteur sur le plancher un rayon fixe 11, ayant une largeur et une longueur proportionnées à la largeur et à la longueur d'un pain à recevoir. Un pain P1 est illustré comme déposé sur le rayon fixe 11, à lignes continues sur la figure 1 et à points et traits sur la figure 2. La figure 1 représente deux de ces rayonnages, placés côte à côte, et on voit comment les montants 10 de droite du premier rayonnage, situé à gauche, peuvent servir aussi pour le second rayonnage, qui comporte à son tour d'autres montants 10′ et une rayon fixe 11′. Il est entendu que le nombre des rayonnages ainsi placés côte à côte peut être quelconque, de manière compatible avec l'espace disponible et avec les possibilités de translation horizontale de la grue suspendue 4-9.

Au-dessus du rayon fixe 11, les montans 10 portent une paire de glissières horizontales latérales supérieures, dont la distance verticale du rayon fixe 11 est quelque peu plus grande que la hauteur du pain à recevoir. D'autres paires de glissières horizontales latérales supérieures, dans l'exemple représenté les deux paires 18 et 24, sont soutenues par les montants 10 à des distances verticales analogues. A chaque paire de glissières horizontales latérales supérieures 12, 18, 24, situées au-dessus du rayon fixe 11, correspond une paire de glissières horizontales latérales inférieures, respectivement 13, 19, 25, situées à des courtes distances verticales sous le rayon fixe 11.

Aux extrémités des glissières supérieures 12 sont installées des roues de renvoi 14, et aux extrémités des glissières inférieures 13 sont installées des roues de renvoi 15. Des roues de renvoi analogues, respectivement 20 et 26, 21 et 27 sont installées aux extrémités des autres glissières supérieures 18 et 24 et des glissières inférieures correspondantes 19 et 25.

Une paire de chaînes sans fin 16 s'étend le long des glissières supérieures 12, sur les roues de renvoi 14, de ces dernières aux roues de renvoi 15 et le long des glissières inférieures 13. De manière analogue, une paire de chaînes sans fin 22 s'étend le long des glissières supérieures 18, sur les roues de renvoi 20, de ces dernières aux roues de renvoi 21 et le long des glissières inférieures 19, et une paire de chaînes sans fin 28 s'étend le long des glissières supérieures 24, sur les roues de renvoi 26, de ces dernières aux roues de renvoi 27 et le long des glissières inférieures 25.

Entre les chaînes 16 constituant une paire s'étendent des éléments transversaux reliés aux chaînes, lesquels, dans leur ensemble, constituent un rayon mobile articulé 17 porté par les chaînes 16. Toutefois, le rayon mobile 17 ne s'étend pas sur toute la longueur des chaînes 16 mais seulement sur une longueur proportionnée à la longueur d'un pain à recevoir, c'est-à-dire substantiellement sur la longueur du rayonnage. Sur tout le restant de leur extension, les chaînes 16 s'étendent le long des glissières respectives et entre les roues de renvoi respectives, sans présenter aucun élément transversal qui les relie. Des dispositions analogues de rayons mobiles articulés 23 et 29, d'une longueur proportionnée à la longueur des pains à recevoir et donc du rayonnage, sont appliquées aux autres paires de chaînes, respectivement 22 et 28.

En considération de la disposition décrite, on comprendra que, en faisant coulisser les différentes chaînes, chaque rayon mobile 17, 23, 29 peut être déplacé en une position de travail située au-dessus du rayon fixe 11, comme il est illustré pour le rayon mobile 17, ou bien en une position de repos située sous le rayon fixe 11, comme il est illustré pour les rayons mobiles 23 et 29. Lorsqu'un rayon mobile se trouve en position de travail, il couvre le rayon situé en dessous et il est prêt à recevoir un pain, comme le montre la figure 1 pour le rayon 17, sur lequel la grue suspendue 4-9 peut déposer le pain P2.

Cette opération est rendue possible par le fait que les rayons 23 et 29, qui en position de travail se disposeraient au-dessus du rayon considéré 17, se trouvent au moment considéré en position de repos, si bien que les chaînes respectives 22 et 28 n'empêchent pas l'opération de la grue suspendue, car elles ne présentent dans le champ de travail de la grue aucun élément transversal qui les relie.

Par conséquent, le remplissage de l'un des rayonnages selon l'invention se fait de la façon suivante. Au début, tous les rayons mobiles 17, 23 et 29 sont amenés en position de repos, ce qui rend accessible à partir du haut le rayon fixe 11. Au moyen de la grue suspendue, un pain P1 est déposé sur le rayon fixe 11. Puis, le rayon mobile 17 est déplacé de la position de repos à la position de travail, ainsi réalisant la configuration représentée par le rayonnage de gauche de la figure 1. Au moyen de la grue suspendue, un pain P2 peut être alors déposé sur le rayon mobile 17. Après cela, le rayon mobile 23 est déplacé de la position de repos à la position de travail, et il reçoit à son tour un pain. Enfin, la même opération est répétée pour le rayon mobile 29. A ce point le rayonnage est complètement chargé et la grue suspendue peut passer à charger un rayonnage adjacent. Sur la figure 1, le rayonnage de droite est illustré avec ses rayons 11′, 17′, 23′ et 29′ tous chargés avec les pains P1′, P2′, P3′ et P4′ respectivement.

Il est clair que, après que les pains ainsi emmagasinés ont achevé leur période de maturation, en procédant aux mêmes opérations dans le sens inverse un rayonnage peut être déchargé par la grue suspendue, en acheminant les pains au même ruban transporteur 1, utilisé maintenant pour éloigner les pains mûrs, ou bien en acheminant les pains vers tout autre moyen d'éloignement.

Les rayons articulés d'un rayonnage selon l'invention sont comparables aux tapis transporteurs des cellules des magasins connus comportant des cellules en réseau, qui ont par ailleurs une extension longitudinale double au moins; c'est pourquoi le magasin selon l'invention se révèle quelque peu plus économique qu'un magasin connu de la même capacité. Par conséquent, l'application de l'invention permet, avec des moyens relativement économiques, d'exploiter au maximum, tant horizontalement qu'en hauteur, l'espace disponible pour l'emmagasinage de maturation de pains de matière synthétique expansée. D'autre part, les mouvements opératifs exigés aussi bien par la grue suspendue que par les rayons mobiles sont de la plus grande simplicité possible, et il ne se pose donc aucun problème pour la réalisation d'un contrôle entièrement automatique du fonctionnement du magasin.

Les rayons mobiles peuvent être constitués par des éléments en plaque 17′ réciproquement articulés en 17″, comme il est montré dans la partie de droite du rayon mobile 17 suivant la figure 2. Ces éléments articulés en store peuvent être simplement reliés aux chaînes latérales, ou bien ils peuvent se substituer eux-mêmes aux chaînes en correspondance de leur propre extension longitudinale. Au lieu d'être constitués par des éléments rigides articulés, les rayons mobiles pourraient aussi être constitués par un organe flexible, par exemple en caoutchouc ou en une autre matière élastomère.

Une structure préférée a été décrite pour faire passer les moyens de réception des pains de la position de travail à la position de repos et viceversa, et il faut remarquer qu'aux rayons de cette structure, qui sont articulés et montés sur des chaînes, peut être attribuée aussi une fonction de transport. Tous ou une partie d'entre eux peuvent ainsi se charger d'acheminer aux transformations suivantes les pains mûrs, sans exiger leur transfert au moyen de la grue suspendue. Par exemple, le rayon 17 suivant la figure 2 peut transférer les pains mûrs sur un transporteur indiqué schématiquement par des lignes interrompues en 30.

De même, aux rayons fixes peut être attribuée une fonction de transport similaire, en les conformant, eux aussi, de manière analogue aux rayons mobiles, ou bien en forme de tapis transporteurs. Par exemple, le rayon fixe 11 suivant la figure 2 peut comprendre un tapis transporteur indiqué schématiquement en 31 par des lignes interrompues, pour permettre le transfert horizontal des pains mûrs.

Toutefois, il faut entendre que des moyens de réception de pains différents de ceux décrits pourraient aussi être adoptés. Par exemple, là où les glissières horizontales latérales supérieures ont été prévues, on pourrait articuler à la charpente portante des rayons soulevables en forme de trappe, en une seule pièce ou bien en deux parties symétriques.

Comme il a été dit, le nombre de rayons superposés dans un rayonnage selon l'invention peut être modifié en fonction de l'espace vertical disponible et, de manière analogue, le nombre de rayonnages adjacents peut être modifié en fonction de l'espace disponible horizontalement.

## Revendications

1. Magasin pour la maturation de pains de matière synthétique expansée, destiné à une installation desservie par un ruban transporteur (1) amenant les pains à distribuer dans le magasin et par une grue suspendue (5-8) à pince (9) disposée pour soulever un pain du ruban transporteur (1), pour le déplacer latéralement et pour le déposer dans un espace de maturation, caractérisé en ce qu'il comprend au moins un rayonnage (10-29) orienté parallèlement au ruban transporteur (1) et disposé latéralement à ce dernier, comportant une charpente (10) qui supporte un rayon inférieur fixe (11) dont la largeur et la longueur sont proportionnées à la largeur et à la longueur des pains à recevoir, et au-dessus du rayon fixe (11), à des distances réciproques verticales quelque peu supérieures à la hauteur des pains à recevoir, une pluralité de moyens de réception des pains (12-17, 18-23, 24-29), dont chacun peut être déplacé entre une position de travail, dans laquelle il constitue un rayon d'une largeur et d'une longueur proportionnées à la largeur et à la longueur des pains à recevoir, et une position de repos, dans laquelle il laisse dégagé l'accès à partir du haut au rayon situé en dessous.

2. Magasin de maturation selon la revendication 1, caractérisé en ce que ladite pluralité de moyens de réception (12-29) comprend: une pluralité de paires de glissières horizontales supérieures latérales (12,18,24) supportées par la charpente (10) au-dessus du rayon fixe (11) aux distances verticales indiquées, et une pluralité correspondante de paires de glissières horizontales inférieures latérales (13,19,25) supportées par la charpente (10) sous le rayon fixe (11) à des courtes distances réciproques; des moyens de renvoi (14,15,20,21,26,27) disposés aux extrémités de chaque glissière horizontale supérieure et inférieure; pour chaque double paire formée d'une paire de glissières supérieures (12,18,24) et de la paire correspondante de glissières inférieures (13,19,25), une paire de chaînes continues (16,22,28) parcourant lesdites glissières et passant sur lesdits moyens de renvoi; et pour chaque paire de chaînes, un rayon mobile (17,23,29) s'étendant transversalement d'une chaîne à l'autre et s'étendant longitudinalement sur une longueur proportionnée à celle des pains à recevoir.

3. Magasin de maturation selon la revendication 2, caractérisé en ce qu'à une partie au moins des rayons mobiles (17,23,29) est confiée une fonction de transport des pains mûrs vers les transformations ultérieures.

4. Magasin de maturation selon la revendication 1, caractérisé en ce qu'une partie au moins des rayon (11) opérativement fixes par rapport à la réception des pains ont la structure d'un transporteur (31), et qu'à ces rayons est confiée une fonction de transport des pains mûrs.

5. Magasin de maturation selon la revendication 2, caractérisé en ce que chaque rayon mobile (17) est constitué par une pluralité d'éléments (17′) articulés en store, s'étendant de l'un à l'autre des chaînes correspondantes (16) et reliés à elles.

6. Magasin de maturation selon la revendication 1, caractérisé en ce qu'il comprend une pluralité desdits rayonnages (10-29; 10′,29′) placés côte à côte l'un de l'autre.

## Claims

1. A magazine for the maturation of cakes of synthetic foam material for a plant served by a belt conveyor (1) bringing the cakes for distribution in the magazine, and by an overhead crane (5-8) with a gripper (9) intended for lifting a cake from the belt conveyor (1), for shifting it laterally and for depositing the same into a maturation space, characterised in that it includes at least one stand (10-29) arranged parallel to and side by side of the belt conveyor (1), comprising a frame (10) which supports a fixed lower shelf (11) whose width and length are adapted to the width and length of the cakes to be received, and above said fixed shelf (11), at vertical mutual distances somewhat higher than the height of the cakes to be received, a plurality of means (12-17, 18-23, 24-29) for receiving said cakes, each of such means being shiftable from a working position in which it constitutes a surface whose width and length are adapted to the width and length of the cakes to be received, and a rest position, in which it leaves free the access from above to the shelf lying below.

2. A maturation magazine according to claim 1, characterized in that said plurality of reception means (19-29) comprises: a plurality of pair, of lateral upper horizontal guides (12,18,24) supported by the frame (10) above the fixed shelf (11) at the stated vertical distances, and a corresponding plurality of pairs of lateral lower horizontal guides (13,19,25) supported by the frame (10) under the fixed shelf (11) at short mutual distances; return means (14,15, 20,21, 26,27) placed at the ends of each upper and lower horizontal guide; for each double pair formed by a pair of upper guides (12,18,24) and the corresponding pair of lower guides (13,19,25), a pair of continuous chains (16,22,28) running along said guides and passing over said return means; and for each pair of chains a movable shelf (17,23,29) extending transversely from one chain to the other and extending longitudinally over a length adapted to the lenght of the cakes to be received.

3. A maturation magazine according to claim 2, characterized in that at least a part of the movable shelves (17,23,29) is given a function for the transport of matured cakes towards further manufacturing processes.

4. A maturation magazine according to claim 1, wherein at least a part of the shelves (11) operatively fixed for the reception of the cakes have the structure of a conveyor (31) and are entrusted with a function for the transport of the matured cakes.

5. A maturation magazine according to claim 2, characterized in that each movable shelf (17) comprises a plurality of slat like articulated members (17') extending from one of the respective chains (16) to the other and linked to said chains.

6. A maturation magazine according to claim 1, characterized in that it comprises a plurality of said stands (10-29, 10',29') placed side by side.

## Patentansprüche

1. Lager zum Ausreifen von Schaumstoffblöcken für eine Anlage, die ein Förderband (1), das die im Lager zu verteilenden Blöcke zuführt, und einen Hängekran (5-8) besitzt, dessen Greifer (9) so angeordnet ist, dass er einen Block vom Förderband (1) abhebt, denselben seitlich verschiebt und in einen zum Ausreifen vorgesehenen Raum legt, dadurch gekennzeichnet, dass es wenigstens ein parallel zum Förderband (1) gerichtetes und an der Seite desselben angeordnetes Regal (10-29) aufweist, dessen Gerippe (10) eine untere ortsfeste Ablage (11), die in der Breite und in der Länge der Breite und der Länge der aufzunehmenden Blöcke entspricht, und oberhalb der festen Ablage (11) mehrere Mittel (12-17, 18-23, 24-29) zur Aufnahme der Blöcke trägt, deren senkrechte Abstände voneinander ziemlich grösser als die Höhe der aufzunehmenden Blöcke sind, die jeweils zwischen eine Arbeitsstellung, in der sie je eine Ablage darstellen, deren Breite und Länge der Breite und der Länge der aufzunehmenden Blöcke entsprechen, und eine Ruhestellung verschiebbar sind, in der sie je den Zugang von oben zu der darunterliegenden Ablage frei lassen.

2. Lager zum Ausreifen von Schaumstoffblöcken nach Anspruch 1, dadurch gekennzeichnet, dass es sich bei den mehreren Aufnahmemitteln (12-29) um eine Mehrzahl seitlicher, oberer, waagerechter Schienenpaare (12,18,24), die durch das Gerippe (10) oberhalb der festen Ablage (11) in den angegebenen Abständen abgestützt werden, um eine entsprechende Mehrzahl seitlicher, unterer, waagerechter Schienenpaare (13,19,25), die durch das Gerippe (10) unterhalb der festen Ablage (11) in kurzen Abständen voneinander abgestzützt werden, um an den jeweiligen Enden der oberen und unteren waagerechten Schienen angeordnete Umlenkmittel (14,15,20,21,26,27), um ein Paar endloser Ketten (16,22,28), die für jedes aus einem oberen Schienenpaar (12,18,24) und dem entsprechenden unteren Schienenpaar (13,19,25) bestehende Doppelpaar vorgesehen sind, in diesen Schienen laufen und um die Umlenkmittel geführt werden, und um eine für jedes Kettenpaar vorgesehene bewegliche Ablage (17,23,29) handelt, die sich in Querrichtung von der einen Kette zur anderen und in Längsrichtung über eine Länge erstreckt, die der Länge der aufzunehmenden Blöcke entspricht.

3. Lager zum Ausreifen von Schaumstoffblöcken nach Anspruch 2, dadurch gekennzeichnet, dass wenigstens ein Teil der beweglichen Ablagen (17,23,29) die Funktion des Transportes der ausgereiften Blöcke zur weiteren Bearbeitung übernimmt.

4. Lager zum Ausreifen von Schaumstoffblöcken nach Anspruch 1, dadurch gekennzeichnet, dass wenigstens ein Teil der ortsfesten Ablagen (11) zur Aufnahme der Blöcke den Aufbau eines Förderers (31) aufweisen und dass diese Ablagen die Funktion des Transportes der ausgereiften Blöcke übernehmen.

5. Lager zum Ausreifen von Schaumstoffblöcken nach Anspruch 2, dadurch gekennzeichnet, dass jede bewegliche Ablage (17) aus mehreren rolladenartig gelenkigen Elementen (17') besteht, die sich von der einen zur anderen entsprechenden Kette (16) erstrecken und mit diesen Ketten verbunden sind.

6. Lager zum Ausreifen von Schaumstoffblöcken nach Anspruch 1, dadurch gekennzeichnet, dass es eine Mehrzahl von nebeneinander angeordneten Regalen (10-29; 10'-29') umfasst.

FIG. 1

FIG. 2